# EUROPÄISCHE PATENTSCHRIFT

(11) **EP 4 327 383 B1**
(45) Veröffentlichungstag und Bekanntmachung des Hinweises auf die Patenterteilung: **14.05.2025**
(21) Anmeldenummer: 22714135.5
(22) Anmeldetag: 09.03.2022
(51) Int. Cl.: H01M 8/04007, H01M 8/04029, H01M 8/18

(54) **BATTERIEKRAFTWERK MIT EINEM KÜHLSYSTEM**
BATTERY STORAGE POWER PLANT HAVING A COOLING SYSTEM
CENTRALE ÉLECTRIQUE DE STOCKAGE DE BATTERIE DOTÉE D'UN SYSTÈME DE REFROIDISSEMENT

(30) Priorität: 22.04.2021 DE 102021110200
(43) Veröffentlichungstag der Anmeldung: 28.02.2024
(73) Patentinhaber: Liva Power Management Systems GmbH, 65926 Frankfurt am Main (DE)
(72) Erfinder: LÜTH, Thomas, 79104 Freiburg (DE); LENHART, Lorenz, 89073 Ulm (DE)
(74) Vertreter: Fuchs Patentanwälte Partnerschaft mbB
(86) Internationale Anmeldenummer: PCT/EP2022/055968
(87) Internationale Veröffentlichungsnummer: WO 2022/223197

(56) Entgegenhaltungen:
- EP-A1- 3 290 671
- CN-U- 203 134 898
- CN-U- 206 673 034

## Beschreibung

Die Erfindung betrifft ein Batteriekraftwerk mit einem Kühlsystem, wobei das Batteriekraftwerk eine Vielzahl von separaten Batterie-Energiespeichern umfasst, welche elektrisch miteinander verbunden sind, um elektrische Energie aufzunehmen oder abzugeben. Die Erfindung betrifft ein Batteriekraftwerk mit Batterie-Energiespeichern, welche als Redox-Flow-Batterie ausgeführt sind.

Solche Batteriekraftwerke mit einer Vielzahl von separaten Batterie-Energiespeichern, welche auch als Batteriemodule bezeichnet werden, sind aus dem Stand der Technik bekannt. So offenbart die WO 2014/170373 A2 ein Batteriekraftwerk mit mehreren parallelgeschalteten Batteriesträngen, wobei die Batteriestränge jeweils mehrere Gleichstrom-Batteriemodule umfassen, welche in Reihe geschaltet sind.

Außerdem ist aus dem Stand der Technik bekannt, dass einzelne Redox-Flow-Batteriemodule über eine Kühleinrichtung verfügen können. Dazu umfasst ein solches Batteriemodul ein oder mehrere Wärmetauscher, mit welchen der Elektrolyt des Batteriemoduls gekühlt werden kann. Der Wärmetauscher kann dabei an diversen Orten des Batteriemoduls angeordnet sein, beispielsweise in oder an den Elektrolyt-Tanks bzw. einem der Tanks, in den Zellen des Batteriemoduls oder am Rohrsystem, mit welchem der Elektrolyt umgewälzt wird. Hierzu wird auf die Schriften WO 2019/126381 A1, US 9,774,044 B2 und WO 2019/139566 A1 verwiesen. CN 203134898U offenbart ebenfalls ein Redox Flow Batteriekraftwerk in dem die Batteriemodule parallel geschaltet werden und die Batterien durch ein Kühlsystem gekühlt werden. Das Kühlsystem besteht aus einem Kreislauf und ist mit jeder Batterie verbunden. Die Kühlung des Elektrolyten findet mittels Wärmetauscher statt und der Fluss des Kühlmittels wird mit Ventilen geregelt, die über eine Steuereinheit mit Temperatursensoren im Elektrolyten verbunden sind. Die Wärmetauscher sind in den Elektrolytkreislauf eingebunden und kontrollieren so die Temperatur des Elektrolyten.

Die Aufgabe der Erfindung ist es, ein Batteriekraftwerk mit Batterie-Energiespeichern vom Typ Redox-Flow und mit einem Kühlsystem anzugeben, welches geeignet ist die Effizienz des Batteriekraftwerks zu verbessern.

Die Aufgabe wird erfindungsgemäß durch eine Ausführung entsprechend dem unabhängigen Anspruch gelöst. Die Aufgabe wird ferner durch ein Betriebsverfahren gemäß dem unabhängigen Verfahrensanspruch gelöst. Weitere vorteilhafte Ausführungsformen der vorliegenden Erfindung finden sich in den Unteransprüchen.

Im Folgenden wird die Erfindung anhand von Figuren erläutert. Die Figuren zeigen im Einzelnen:
Fig.1 Batteriemodul vom Typ Redox-Flow
Fig.2 Erfindungsgemäßes Batteriekraftwerk
Fig.3 Elektrische Struktur eines Batteriekraftwerkes

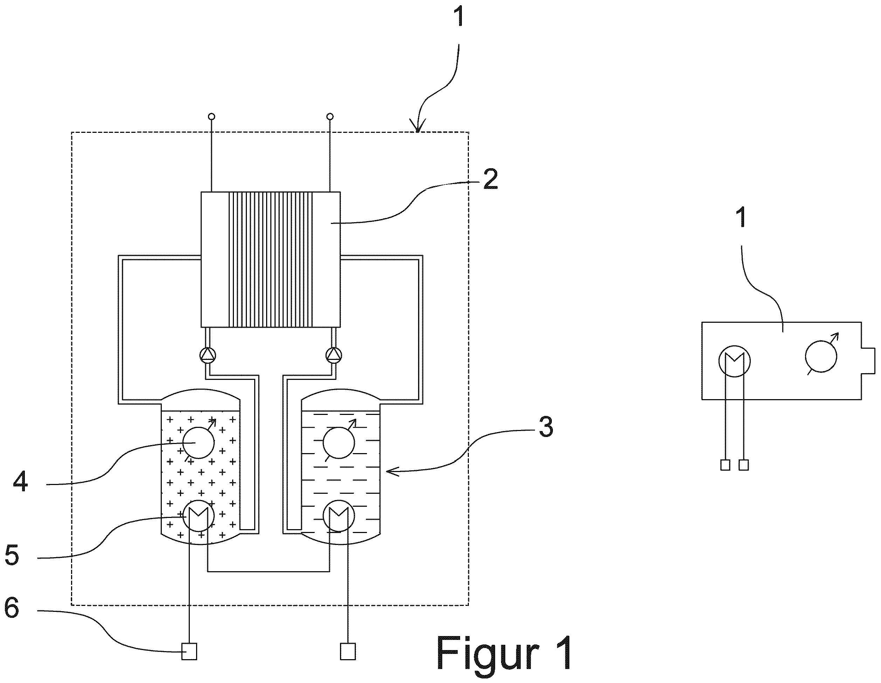

Figur 1 zeigt auf der linken Seite in schematischer Darstellung ein Batteriemodul vom Typ Redox-Flow. Das Batteriemodul ist mit 1 bezeichnet. Das Batteriemodul umfasst eine Zellanordnung, welche mit 2 bezeichnet ist, und eine Tankeinrichtung, welche mit 3 bezeichnet ist. Bei der Zellanordnung 2 handelt es sich um eine Anordnung von einer Vielzahl von Redox-Flow-Zellen, welche beliebig angeordnet sein können. Beispielsweise könnte es sich um einen einzelnen Zell-Stack (d.h. einer Serienschaltung von mehreren Redox-Flow-Zellen), eine Serienschaltung von mehreren Stacks, eine Parallelschaltung von mehreren Stacks, oder um eine Kombination von Serien- und Parallelschaltung von mehreren Stacks handeln. Die Tankeinrichtung 3 dient zum Speichern des Elektrolyten und zur Versorgung der Zellanordnung 2 mit Elektrolyt. Dazu umfasst die Tankeinrichtung 3 bis auf wenige Ausnahmen wenigstens zwei Tanks, ein Rohrsystem zur Verbindung der Tanks mit der Zellanordnung 2 und Pumpen zum Fördern des Elektrolyten. Figur 1 zeigt dabei zwei separate Pumpen. Genauso gut könnte der Elektrolyt mit einer Doppelkopfpumpe gefördert werden, d.h. mit zwei Pumpen, welche über einen gemeinsamen Motor angetrieben werden. Die Tankeinrichtung 3 ist dabei so ausgebildet, dass sie alle Zellen der Zellanordnung 2 mit Elektrolyt versorgen kann. Fördern die Pumpen also den Elektrolyten, so werden alle Zellen der Zellanordnung 2 von demselben durchströmt.

Das Batteriemodul 1 umfasst wenigstens einen Temperatursensor, welcher so angeordnet ist, dass er eine Elektrolyt-Temperatur erfassen kann. In Figur 1 sind zwei solche Sensoren dargestellt, von denen einer mit 4 bezeichnet ist. Die Temperatursensoren 4 sind in der Ausführungsform gemäß Figur 1 in der Tankeinrichtung 3 angeordnet. Sie könnten aber genauso gut an jeder anderen geeigneten Stelle im Batteriemodul 1 angeordnet sein, an der sie eine Elektrolyt-Temperatur erfassen können.

Das Batteriemodul 1 umfasst ferner wenigstens einen Wärmetauscher, welcher so angeordnet und ausgebildet ist, dass er Wärme mit einem Elektrolyt des Batteriemoduls 1 austauschen kann, d.h. dass er Wärme einem Elektrolyt entziehen oder Wärme einem Elektrolyt zuführen kann. In Figur 1 sind zwei solche Wärmetauscher dargestellt, von denen einer mit 5 bezeichnet ist. Die Wärmetauscher 5 sind in der Ausführungsform gemäß Figur 1 in der Tankeinrichtung 3 angeordnet. Sie könnten aber genauso gut an jeder anderen geeigneten Stelle im Batteriemodul 1 angeordnet sein, an der sie einen Wärmeaustausch mit Elektrolyt bewirken können. Damit ein Wärmetauscher 5 seine Funktion erfüllen kann, muss er von einem Kühlfluid durchströmt werden, welches dem Wärmetauscher 5 von außerhalb des Batteriemoduls 1 zugeführt wird. Dazu sind geeignete Zuleitungen vorzusehen. In Figur 1 sind die Zuleitungen so ausgeführt, dass die beiden dargestellten Wärmetauscher 5 in Serie geschaltet sind, d.h. das Kühlfluid durchströmt zunächst den einen und danach den anderen Wärmetauscher 5. Genauso gut könnten die Wärmetauscher 5 auch parallel geschaltet bzw. jeweils separat voneinander mit Kühlfluid versorgt werden.

Bei Redox-Flow Batteriemodulen auf der Basis von Vanadium zeigen die beiden Elektrolyte (positiver und negativer Elektrolyt) ein unterschiedliches thermisches Verhalten. Daher würde man bei einer Reihenschaltung der Wärmetauscher die Fließrichtung des Kühlfluids so wählen, dass das Kühlfluid zuerst den Wärmetauscher durchströmt, welcher im Kontakt mit dem positiven Elektrolyt ist, und danach erst den Wärmetauscher durchströmt, welcher im Kontakt mit dem negativen Elektrolyt ist.

In den Zuleitungen zur Versorgung der Wärmetauscher 5 mit Kühlfluid ist wenigstens ein Ventil angeordnet, mit welchem der Durchfluss von Kühlfluid durch den betreffenden Wärmetauscher 5 kontrolliert werden kann. In Figur 1 sind zwei solche Ventile dargestellt, von denen eines mit 6 bezeichnet ist. Zur Gewährleistung der Funktionalität der in Figur 1 dargestellten Ausführungsform würde eines der beiden Ventile 6 genügen. Wenn zwei Ventile 6 vorgesehen sind, dann wird dadurch der Einbau bzw. Austausch eines Batteriemoduls 1 in ein erfindungsgemäßes Batteriekraftwerk erleichtert, da das betreffende Batteriemodul komplett vom Kühlkreislauf abgekoppelt werden kann. In Figur 1 sind die Ventile 6 außerhalb des Batteriemoduls 1 dargestellt. Genauso gut könnten sie Teil des Batteriemoduls 1, d.h. innerhalb des gestrichelten Rahmens angeordnet sein.

Auf der rechten Seite von Figur 1 ist eine symbolhafte Darstellungsweise des Batteriemoduls 1 gezeigt. Dabei ist das dargestellte "Innenleben" des Batteriemoduls 1 auf den wenigstens einen Temperatursensor 4 und den wenigstens einen Wärmetauscher 5 reduziert.

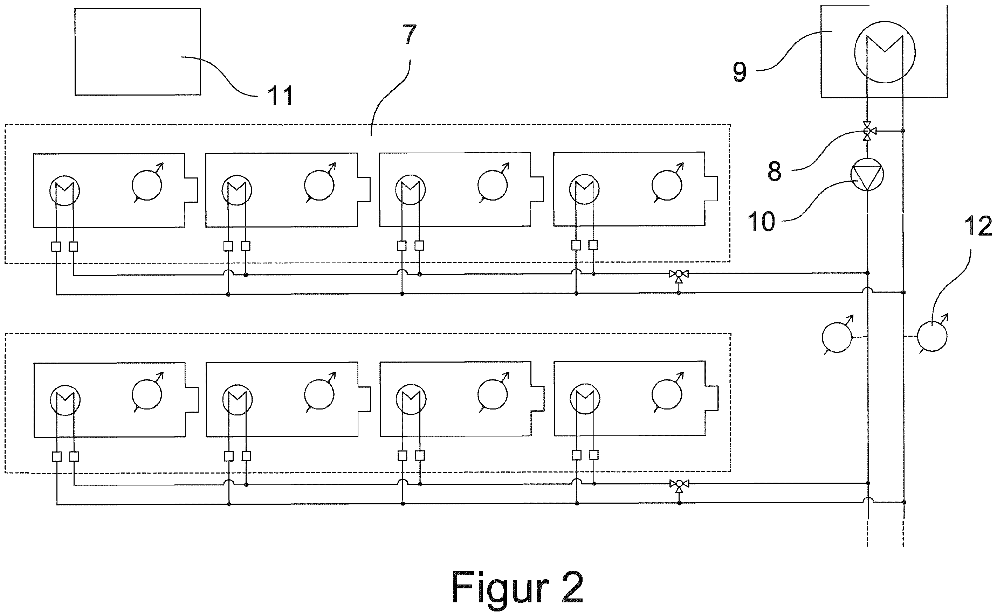

Figur 2 zeigt ein erfindungsgemäßes Batteriekraftwerk. Das Batteriekraftwerk umfasst eine Vielzahl von separaten Batteriemodulen 1, wobei die Batteriemodule 1 in mehreren parallelgeschalteten Batteriesträngen angeordnet sind, und wobei ein Batteriestrang jeweils mehrere Batteriemodule 1 umfasst, welche in Reihe geschaltet sind. In Figur 2 sind zwei solche Batteriestränge dargestellt und jeweils durch einen gestrichelten Rahmen gekennzeichnet. Dabei ist einer der dargestellten Batteriestränge mit 7 bezeichnet.

Das erfindungsgemäße Batteriekraftwerk umfasst ein Kühlsystem zur Versorgung der Wärmetauscher 5 der Batteriemodule 1 mit Kühlfluid. Das Kühlsystem umfasst einen Vor- und einen Rücklauf. Alle Batteriemodule 1 des Batteriekraftwerks sind dabei mit dem Vor- und Rücklauf verbunden, d.h. der Kühlkreislauf des Kühlsystems bildet eine Parallelschaltung aller Batteriemodule 1 des Batteriekraftwerks. Für jedes Batteriemodul 1 ist dabei wenigstens ein Ventil 6 vorgesehen, mit welchem der Kühlfluiddurchfluss durch den oder die Wärmetauscher 5 des betreffenden Batteriemoduls 1 kontrolliert werden kann.

Um die Gesamtrohrlänge des Kühlsystems möglichst gering zu halten, ist es zweckmäßig das Kühlsystem so auszuführen, dass die Wärmetauscher von mehreren Batteriemodulen einen sogenannten Kühlstrang bilden. Ein Kühlstrang umfasst zwei parallel verlaufende Leitungen, wobei jedes zum Kühlstrang gehörige Batteriemodul 1 mit den beiden Leitungen verbunden ist. Es bietet sich an, dass beispielsweise alle Batteriemodule, welche zu einem Batteriestrang gehören, einen Kühlstrang bilden. Im Unterschied zur elektrischen Verschaltung der Batteriemodule in einem Batteriestrang sind die zugehörigen Wärmetauscher 5 der Batteriemodule in einen Kühlstrang so verbunden, dass sie eine Parallelschaltung bilden. Ein Kühlstrang kann auch die Batteriemodule von mehr als einem Batteriestrang miteinander verbinden. Figur 2 zeigt beispielhaft zwei Batteriestränge, wobei die Batteriemodule von jedem Batteriestrang durch einen zugehörigen Kühlstrang verbunden sind. Die beiden parallel verlaufenden Leitungen der Kühlstränge münden dabei jeweils in einen Kühlstrang, welcher in Figur 2 rechts angeordnet ist und im Folgenden als Hauptkühlstrang bezeichnet wird. Die Kühlstränge und der Hauptkühlstrang bilden einen Kühlkreislauf.

Das Kühlsystem umfasst ferner wenigstens eine Umwälzpumpe mit der das Kühlfluid im Kühlkreislauf umgewälzt werden kann. Umfasst das Kühlsystem nur eine Umwälzpumpe, dann ist diese zweckmäßigerweise im Hauptkühlstrang angeordnet. In Figur 2 ist die dargestellte Umwälzpumpe mit 10 bezeichnet. Das Kühlsystem umfasst so einen Vor- und einen Rücklauf, wobei die Wärmetauscher der einzelnen Batteriemodule jeweils mit dem Vor- und mit dem Rücklauf verbunden sind, wie in Figur 2 dargestellt.

Das Kühlsystem umfasst außerdem wenigstens eine Kühleinrichtung, welche mit 9 bezeichnet ist und mit dem Vor- und Rücklauf des Kühlkreislaufes verbunden ist. Die Kühleinrichtung 9 ist so ausgebildet, dass sie die Temperaturdifferenz zwischen dem Vor- und dem Rücklauf beeinflussen kann. Eine solche Kühleinrichtung 9 kann beispielsweise einen Wärmetauscher und einen Lüfter umfassen, wobei der Wärmetauscher als Flüssig/Gas-Wärmetauscher ausgebildet ist. Der Lüfter lässt kühle Außenluft am Wärmetauscher vorbeiströmen, so dass das den Wärmetauscher durchströmende Kühlfluid gekühlt wird.

Das Kühlsystem umfasst wenigstens ein Dreiwegeventil. In Figur 2 sind insgesamt 3 Dreiwegeventile dargestellt, von denen eines mit 8 bezeichnet ist. Eines der Dreiwegeventile 8 ist dabei so angeordnet, dass es den Volumenstrom des Kühlfluids kontrollieren kann, welches durch die Kühleinrichtung 9 fließt. Mit diesem Dreiwegeventil 8 kann so der Temperaturunterschied zwischen dem Vor- und dem Rücklauf im Hauptkühlstrang und somit die Kühlleistung des Kühlsystems beeinflusst werden. Wenn der Volumenstrom, welcher durch die Kühleinrichtung 9 fließt, erhöht wird, dann erhöht sich der Temperaturunterschied zwischen dem Vor- und dem Rücklauf im Hauptkühlstrang. Wenn mehr als eine Kühleinrichtung 9 vorgesehen ist, dann ist für jede der vorgesehenen Kühleinrichtungen 9 ein zugehöriges Dreiwegeventil 8 vorzusehen. Optional kann auch für jeden Kühlstrang ein Dreiwegeventil 8 vorgesehen sein, welches jeweils so angeordnet ist, dass es den Volumenstrom des Kühlfluids kontrollieren kann, welches durch den betreffenden Kühlstrang fließt, d.h. welches durch die beiden parallel verlaufenden Leitungen des Kühlstranges fließt. Mit diesen zusätzlichen Dreiwegeventilen 8 kann so der Temperaturunterschied zwischen dem Vor- und dem Rücklauf des betreffenden Kühlstranges beeinflusst werden. In Figur 2 ist in jedem dargestellten Kühlstrang ein solches Dreiwegeventil 8 angeordnet. Ggf. kann in den Kühlsträngen jeweils eine weitere Pumpe angeordnet sein, so dass bei jeder Stellung des zugehörigen Dreiwegeventils noch eine ausreichende Umwälzung des Kühlfluids im jeweiligen Kühlstrang gewährleistet wird.

Neben den Temperatursensoren 4 in den einzelnen Batteriemodulen 1 umfasst das Kühlsystem weitere Temperatursensoren außerhalb den Batteriemodulen 1. Diese sind in Figur 2 summarisch durch die zwei Sensorsymbole angedeutet, von denen eines mit 12 bezeichnet ist. Es handelt sich dabei wenigstens um Sensoren 12 zur Erfassung der Temperatur im Vor- und im Rücklauf des Kühlkreislaufes. Weitere Sensoren 12 können optional auch die Temperatur im Vor- und Rücklauf der einzelnen Kühlstränge erfassen. Ferner können optional Temperatursensoren 12 an unterschiedlichen Stellen im Batteriekraftwerk angeordnet sein, um die Temperatur an diesen Stellen zu erfassen.

Das Kühlsystem umfasst ferner eine Steuereinrichtung, welche in Figur 2 mit 11 bezeichnet ist. Die Steuereinrichtung 11 verarbeitet die von den Sensoren 4 und 12 erfassten Messwerte. Die Steuereinrichtung 11 steuert die Stellungen der Ventile 6 und 8 so, dass eine Effizienz des Batteriekraftwerks verbessert werden kann. Bei der erwähnten Effizienz kann es sich beispielsweise um die Energieeffizienz in Bezug auf die Abwärme des Kühlsystems handeln. Es kann sich aber auch um die elektrische Effizienz des Batteriekraftwerks handeln, wie aus den Ausführungen weiter unten klar werden wird.

Die Steuereinrichtung kann bei der beschriebenen Steuerung auch vorteilhaft noch weitere Faktoren mit einbeziehen. Solche zusätzlichen Faktoren sind beispielsweise das Wetter bzw. eine Wetterprognose, oder auch der historische und der prognostizierte Lastgang des Batteriekraftwerkes.

Die Steuereinrichtung bezieht natürlich auch das thermische Verhalten der Batteriemodule in die Steuerung mit ein. Generell wir ein Batteriemodul vom Typ Redox-Flow elektrische effizienter, wenn sie wärmer wird, da dadurch der elektrische Innenwiederstand kleiner wird. Allerdings darf die Temperatur eines Batteriemoduls nicht zu hoch werden, da beim Überschreiten einer kritischen Temperatur Zerstörungsprozesse einsetzen, die in jedem Fall zu vermeiden sind. D.h. die Steuerung durch die Steuereinrichtung ist generell so auszulegen, dass die Batteriemodule so warm wie möglich gehalten werden ohne sie dabei thermisch zu zerstören.

Bei Batteriemodulen vom Typ Redox-Flow auf der Basis von Vanadium erfolgt das Laden in einer endothermen Reaktion und das Entladen in einer exothermen Reaktion. D.h. ohne externe Wärmezufuhr bzw. Wärmeabfuhr kühlt sich eine solche Batterie beim Laden ab und heizt sich beim Entladen auf.

Die Steuereinrichtung 11 kann zentral ausgebildet sein. Die Steuereinrichtung 11 kann aber auch dezentral angeordnete Substeuereinheiten umfassen. So kann beispielsweise jedes Batteriemodul 1 eine Substeuereinheit umfassen, welche die von den im betreffenden Batteriemodul angeordneten Temperatursensoren 4 erfassten Messwerte verarbeitet und die zum betreffenden Batteriemodul gehörigen Ventile 6 ansteuert. Dabei können die Substeuereinheiten wenigstens teilweise autonom agieren. Dabei kann die Verbindung zwischen eventuell vorhandenen Substeuereinheiten, Sensoren 4 und 12 und Ventilen 6 und 8 mit der Steuereinheit 11 auch drahtlos ausgebildet sein.

Die Erfinder haben erkannt, dass das erfindungsgemäße Batteriekraftwerk die Energieeffizienz des Kraftwerks im Vergleich zu einem herkömmlichen Batteriekraftwerks verbessern kann. Dabei wird die Verbesserung der Energieeffizienz durch eine Verringerung der Abwärme des Batteriekraftwerkes erzielt. Die Erfinder haben erkannt, dass beim Betrieb eines Batteriekraftwerkes mit Batteriemodulen vom Typ Redox-Flow immer wieder Situationen eintreten, in denen ein oder mehrere Batteriemodule nicht gekühlt werden müssen bzw. sogar geheizt werden müssen, um möglichst schnell in den optimalen Betriebsbereich zu kommen, d.h. um den Innenwiderstand zu reduzieren und dabei die elektrische Effizienz zu steigern.

So benötigen Batteriemodule, welche sich im Zustand einer Betriebspause (Stand-by) befinden oder geladen werden keine Kühlung, da sie sich in diesen Zuständen ohnehin von selbst abkühlen. Auch Batteriemodule, welche neu in das Kraftwerk integriert werden, oder welche gewartet wurden, benötigen Wärme, um die optimale Betriebstemperatur zu erreichen. Batteriemodule hingegen, welche entladen werden, produzieren dabei Wärme und müssen daher gekühlt werden. Mit einem erfindungsgemäßen Batteriekraftwerk kann dieser Befund dazu genutzt werden, um die Abwärme des Batteriekraftwerkes zu verringern. Dabei umfasst das Betriebsverfahren eines erfindungsgemäßen Batteriekraftwerkes wenigstens einen Betriebszustand, in dem die Ventile 6 und das Dreiwegeventil 8 so gesteuert werden, dass wenigstens ein Batteriemodul Wärme durch das im Kühlkreislauf zirkulierende Kühlfluid aufnimmt, das von einem anderen Batteriemodul an das Kühlfluid abgegeben wurde. Mit anderen Worten wirken die Batteriemodule, welche Wärme aufnehmen, als Kühler für die Batteriemodule, welche Wärme abgeben.

Dies kann auf mehreren Wegen erreicht werden. Der Einfachheit halber werde zur Erläuterung angenommen, dass ein erstes Batteriemodul B1 keine Kühlung benötigt, und dass die Elektrolyt-Temperatur in B1 T1 sei. Ferner werde angenommen, dass ein zweites Batteriemodul B2 Kühlung benötigt und dass die Elektrolyt-Temperatur in B2 T2 sein. Dann sei T1 < T2. Um den gewünschten Wärmefluss von B2 nach B1 zu erzielen, kann das zur Kühleinrichtung gehörige Dreiwegeventil so angesteuert werden, dass die Temperatur des Vorlaufs TV sich so einstellt, dass T1 < TV < T2 ist. Wenn nun die Kühleinrichtung (zeitweise) aus dem Kühlkreislauf herausgeschaltet wird, kommt es zwangsläufig zu dem gewünschten Wärmefluss von B2 nach B1. Eine andere Möglichkeit besteht darin, dass für einige Zeit nur B2 in den Kühlkreislauf zugeschaltet ist, während B1 herausgeschaltet ist - dann gibt B2 Wärme an das Kühlfluid ab, und darauf folgend nur B1 für einige Zeit in den Kühlkreislauf zugeschaltet ist, während B2 herausgeschaltet ist - dann nimmt B1 Wärme aus dem Kühlfluid auf. Für das Zuschalten in den Kühlkreislauf und das Herausschalten aus dem Kühlkreislauf werden die zu den Batteriemodulen zugehörigen Ventile 6 verwendet. Auch bei der zweiten Möglichkeit ist die Kühleinrichtung für die Zeit des gewünschten Wärmeflusses aus dem Kühlkreislauf herausgeschaltet (mittels des zugehörigen Dreiwegeventils 8).

Den allgemeinen Fall mit vielen Batteriemodulen die keine Kühlung benötigen und mit vielen Batteriemodulen die gekühlt werden müssen, kann man so beschreiben, dass das Dreiwegeventil 8 der Kühleinrichtung so angesteuert wird, dass sich die Vorlauftemperatur TV in der Nähe der mittleren Elektrolyt-Temperatur der Batteriemodule befindet. Zusätzlich werden die Ventile 6 der Batteriemodule so gesteuert, dass die zugehörigen Batteriemodule periodisch in den Kühlkreislauf hinein bzw. heraus geschaltet werden, wobei die Länge der Halbperioden vom Kühlbedarf bzw. Wärmebedarf der betreffenden Module abhängig ist.

Die optionalen Dreiwegeventile 8 für einzelne Kühlstränge ermöglichen weitere Freiheitsgrade für den Betrieb eines erfindungsgemäßen Batteriekraftwerkes, da mit Hilfe von diesen die Vorlauftemperaturen der einzelnen Kühlstränge individuell eingestellt werden können. Außerdem können mit denselben die einzelnen Kühlstränge komplett in den Kühlkreislauf hinein oder aus dem Kühlkreislauf herausgeschaltet werden. Das ist dann von Vorteil, wenn ein oder mehrere Kühlstränge als ganze einen unterschiedlichen Kühlbedarf als andere Kühlstränge haben. Das kann z.B. dann der Fall sein, wenn die Batteriemodule eines oder mehrerer Kühlstränge an Stellen im Kraftwerk angeordnet sind, an der eine andere Umgebungstemperatur vorliegt. Das ist z.B. der Fall, wenn Batteriemodule im Kraftwerk übereinandergestapelt angeordnet sind. Die oben angeordneten Batteriemodule sind einer höheren Lufttemperatur ausgesetzt, da sich die oberen Luftschichten durch die Abwärme der darunterliegenden Batteriemodule aufwärmen. Es ist dann zweckmäßig, dass die Batteriemodule der verschiedenen vertikalen Ebenen jeweils in Kühlstränge zusammengefasst werden. Mit Hilfe der zu den Kühlsträngen gehörigen Dreiwegeventilen kann die Vorlauftemperatur in den Kühlsträngen so eingestellt werden, dass die Vorlauftemperatur für weiter oben angeordnete Kühlstränge niedriger ist als die Vorlauftemperatur der weiter unten angeordneten Kühlstränge.

Die Erfinder haben erkannt, dass sich weitere vorteilhafte Betriebsmodi für ein erfindungsgemäßes Batteriekraftwerk angeben lassen, wenn man bedenkt, dass ein solches Batteriekraftwerk häufig im Teillastbetrieb arbeitet muss. Dabei kann der Teillastbetrieb in verschiedener Weise realisiert werden. Für fast alle möglichen Realisierungsweisen lassen sich Betriebsarten angeben, in denen die Effizienz eines solchen Batteriekraftwerkes erfindungsgemäß gesteigert werden kann. Zur Beschreibung dieser Betriebsmodi wird im Folgenden die elektrische Struktur eines solchen Batteriekraftwerkes näher erläutert.

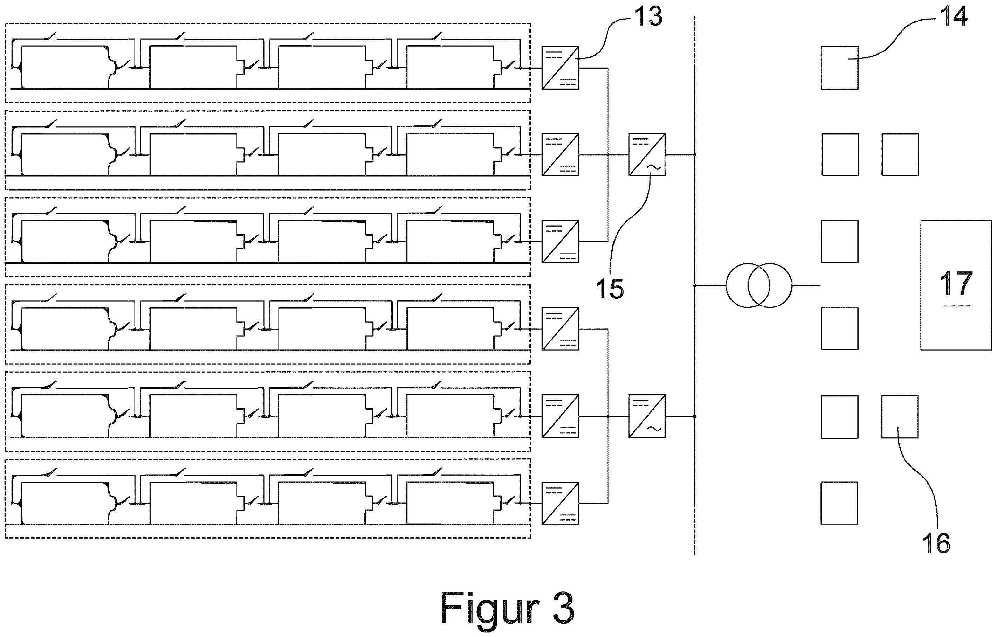

Figur 3 zeigt die elektrische Struktur eines Batteriekraftwerkes in stark vereinfachter Darstellungsweise. Auf der linken Seite sind die Batteriestränge mit einer Reichenschaltung von Batteriemodulen angedeutet. Je ein Batteriestrang ist von einem gestrichelten Rechteck umgeben. Jedes Batteriemodul kann mit Hilfe von einem Schalterpaar in den Batteriestrang hinein oder herausgeschaltet werden. Jeder Batteriestrang ist mit einem DC-DC Steller verbunden. Einer der DC-DC Steller ist dabei mit 13 bezeichnet. Mehrere Batteriestränge sind jeweils über eine Gleichstromschiene miteinander verbunden und bilden so jeweils eine Batteriestranggruppe. Dabei sind die DC-DC Steller jeweils zwischen der zugehörigen Gleichstromschiene und den Batteriesträngen angeordnet. Jede Batteriestranggruppe ist über einen DC-AC Umrichter mit der Wechselstromschiene des Batteriekraftwerkes verbunden. Einer der DC-AC Umrichter ist mit 15 bezeichnet. In Figur 3 bilden jeweils drei Batteriestränge eine Batteriestranggruppe. Die Anzahl der Batteriestränge pro Batteriestranggruppe kann jedoch beliebig sein und hängt nur von der Leistungsfähigkeit der verwendeten DC-AC Umrichter und der Nennleistung der Batteriestränge ab. Die Wechselstromschiene ist mit einen Transformator mit einen Übertragungsnetz verbunden.

Die rechte Seite von Figur 3 zeigt die zum Batteriekraftwerk gehörige Steuerungsstruktur. Jeder Batteriestrang hat eine eigene Steuerung, von denen eine mit 14 bezeichnet ist. Jede Batteriestranggruppe hat wiederum eine eigene Steuerung, von denen eine mit 16 bezeichnet ist. Die zum Batteriekraftwerk gehörige Zentralsteuerung ist mit 17 bezeichnet. Dabei können die untergeordneten Steuerungen 14 und 16 separat ausgeführt oder in die zur Zentralsteuerung gehörige Steuereinrichtung integriert sein. Dasselbe gilt für die zum Kühlsystem gehörige Steuereinrichtung 11.

Zur Realisierung eines Teillastbetriebs des Batteriekraftwerks gibt es mehrere Möglichkeiten:
A: Alle Batteriemodule werden in Teillast betrieben
B: In einer Anzahl von Batteriesträngen werden ein oder mehrere Batteriemodule aus den betreffenden Batteriesträngen herausgeschaltet und gehen dabei in Stand-by
C: Ein oder mehrere Batteriestränge werden in Teillast betrieben oder gehen in Stand-by
D: Ein oder mehrere Batteriestranggruppen werden in Teillast betrieben oder gehen in Stand-by

Der Teillast-Betriebsmodus A bietet den Vorteil, dass dadurch das Batteriekraftwerk einen homogenen Zustand bewahren kann, da alle Batteriemodule gleichmäßig betrieben werden, und so ein ungleicher Ladezustand der Batteriemodule weitestgehend vermieden werden kann. In Bezug auf eine Effizienzsteigerung des Batteriekraftwerkes ergeben sich bei diesem Betriebsmodus jedoch gerade wegen dieser Homogenität keine oder wenige Möglichkeiten.

Bei den Teillast-Betriebsmodi B-D ergibt sich wenigsten zeitweise ein ungleicher Ladezustand der Batteriemodule, da wenigstens einige Batteriemodule weniger schnell bzw. gar nicht geladen bzw. entladen werden im Vergleich zu den übrigen Batteriemodulen. Allerdings kann durch periodisches Durchwechseln der betroffenen Batteriemodule das dadurch erzeugte Ungleichgewicht gering gehalten oder auf lange Sicht sogar vermieden werden. In Bezug auf eine Effizienzsteigerung des Batteriekraftwerkes ergeben sich bei den Teillast-Betriebsmodi B-D hingegen einige Vorteile. So können natürlich in den Betriebsmodi C und D auch die zugehörigen DC-DC Steller bzw. DC-AC Umrichter in Stand-by gehen und so Energie sparen. Außerdem können wie oben beschrieben die Batteriemodule, welche sich in Stand-by befinden, Wärme aufnehmen und so als Kühler für die übrigen Batteriemodule dienen. Das wirkt sich dann vorteilhaft aus, wenn es sich bei dem betreffenden Teillast-Betriebsmodus um einen Entladevorgang handelt, da bei der Entladung Wärme produziert wird und daher eine Kühlung benötigt wird. Es ist klar, dass in solchen Betriebsmodi die Steuereinrichtung 11 des Kühlsystems die Informationen über den jeweiligen aktuell vorliegenden elektrischen Zustand (Stand-by, Entladung, Aufladung) der Batteriemodule für die Steuerung der Ventile 6 und der Dreiwegeventile 8 verwendet.

Der beschriebene positive Effekt kann in den Teillast-Betriebsmodi C und D beim Entladen noch weiter verstärkt werden, wenn die betreffenden Batteriestränge bzw. Batteriestranggruppen nicht in Stand-by versetzt werden, sondern auf Laden geschaltet werden. D.h. während ein Großteil der Batteriemodule entladen wird, werden die übrigen Batteriemodule geladen. Die Leistungsabgabe des Batteriekraftwerks ergibt sich dann aus der Leistungsdifferenz der beiden Batteriemodulgruppen. Da das Laden einer Redox-Flow-Batterie endotherm verläuft, ist die Kühlwirkung der auf Laden geschalteten Batteriemodule entsprechend größer im Vergleich zum Stand-by. Ob sich dabei eine Effizienzsteigerung im Vergleich zu den Betriebsmodi ergibt, welche Stand-by verwenden, hängt von vielen Faktoren ab, und muss daher im Einzelfall betrachtet werden. Manchmal wird es günstiger sein, vorübergehend die Kühleinrichtung 9 zu aktivieren, wenn die Kühlleistung der Batteriemodule im Stand-by nicht mehr ausreichen sollte.

Damit ein Batteriekraftwerk eingerichtet ist, die oben beschriebenen Verfahren automatisiert auszuführen, umfasst es ein Computersystem. Der Begriff Computersystem bezeichnet alle Einrichtungen, die geeignet sind, die beschriebenen Verfahrensschritte automatisiert durchzuführen, insbesondere auch besonders dafür entwickelte ICs oder Mikrocontroller, sowie ASICs (ASIC: application specific integrated circuit). Dabei können die Steuereinrichtung 11 bzw. die Steuerungen 14, 16 selbst ein geeignetes Computersystem umfassen. Alternativ kann das Computersystem auch eine separate Einrichtung darstellen oder Teil einer separaten Einrichtung sein. Die vorliegende Anmeldung ist auch auf ein Computerprogramm gerichtet, welches Befehle umfasst, die bewirken, dass das Batteriekraftwerk die oben beschriebenen Verfahren ausführt. Außerdem ist die vorliegende Anmeldung auf ein computerlesbares Medium gerichtet, auf dem ein solches Computerprogramm gespeichert ist.

Abschließend sei erwähnt, dass große Batteriekraftwerke auch mehrere Gebäude umfassen können, wobei in jedem Gebäude mehrere parallelgeschaltete Batteriestränge angeordnet sind. Dabei kann für jedes Gebäude ein separates Kühlsystem vorgesehen sein, oder ein gesamtes Kühlsystem für alle Gebäude gemeinsam. Im ersten Fall wäre jedes Gebäude für sich bereits als ein Batteriekraftwerk im Sinne der vorliegenden Erfindung zu betrachten. Im zweiten Fall wäre die Gesamtheit der Gebäude als ein Batteriekraftwerk im Sinne der vorliegenden Erfindung zu betrachten.

### Bezugszeichenliste

- 1: Batteriemodul
- 2: Zellanordnung
- 3: Tankeinrichtung
- 4: Temperatursensor
- 5: Wärmetauscher
- 6: Ventil
- 7: Batteriestrang
- 8: Dreiwegeventil
- 9: Kühleinrichtung
- 10: Umwälzpumpe
- 11: Steuereinrichtung des Kühlsystems
- 12: Temperatursensor
- 13: DC-DC Steller
- 14: Steuerung eines Batteriestrangs
- 15: DC-AC Umrichter
- 16: Steuerung einer Batteriestranggruppe
- 17: Zentralsteuerung des Batteriekraftwerks

## Patentansprüche

1. Batteriekraftwerk umfassend eine Vielzahl von Batteriemodulen (1) vom Typ Redox-Flow, wobei die Batteriemodule (1) in mehreren parallelgeschalteten Batteriesträngen (7) angeordnet sind, und wobei ein Batteriestrang (7) jeweils mehrere Batteriemodule (1) umfasst, welche in Reihe geschaltet sind, und wobei jedes Batteriemodul (1) eine Tankeinrichtung (3) zum Speichern von Elektrolyt, wenigstens einen Temperatursensor (4) und wenigstens einen Wärmetauscher (5) umfasst, wobei der Temperatursensor (4) so angeordnet ist, dass er eine Elektrolyt-Temperatur erfassen kann, und wobei der Wärmetauscher (5) so angeordnet und ausgebildet ist, dass er Wärme mit einem Elektrolyt austauschen kann, und wobei das Batteriekraftwerk ein Kühlsystem zur Versorgung der Wärmetauscher (5) der Batteriemodule (1) mit einem Kühlfluid umfasst, und wobei das Kühlsystem einen Kühlkreislauf mit einen Vor- und einen Rücklauf, wenigstens eine Kühleinrichtung (9) und wenigstens eine Umwälzpumpe (10) zur Umwälzung des Kühlfluids im Kühlkreislauf umfasst, und wobei die Kühleinrichtung (9) so ausgebildet ist, dass sie eine Temperaturdifferenz zwischen dem Vor- und dem Rücklauf beeinflussen kann, und wobei das Kühlsystem wenigstens zwei weitere Temperatursensoren (12) zur Erfassung der Temperatur von Vor- und Rücklauf umfasst, **dadurch gekennzeichnet, dass** alle Batteriemodule (1) so mit dem Vor- und Rücklauf des Kühlkreislaufes verbunden sind, dass der Kühlkreislauf eine Parallelschaltung aller Batteriemodule (1) bildet, und wobei das Kühlsystem wenigsten ein Dreiwegeventil (8) umfasst, welches so angeordnet ist, dass es einen Volumenstrom des Kühlfluids kontrollieren kann, welches durch die Kühleinrichtung (9) fließt, und wobei das Kühlsystem für jedes Batteriemodul (1) wenigstens ein Ventil (6) umfasst, welches so angeordnet ist, dass es einen Volumenstrom des Kühlfluids kontrollieren kann, welches durch den Wärmetauscher (5) des zugehörigen Batteriemoduls (1) fließt, und wobei das Kühlsystem eine Steuereinrichtung (11) umfasst, welche so ausgebildet ist, dass es die von den Temperatursensoren (4, 12) erfassten Messwerte verarbeiten und die Stellungen der Ventile (6) und des Dreiwegeventils (8) steuern kann, um eine Effizienz des Batteriekraftwerkes zu verbessern.

2. Batteriekraftwerk nach Anspruch 1, wobei mehrere Batteriemodule (1) einen Kühlstrang bilden, wobei der Kühlstrang zwei parallel verlaufende Leitungen umfasst, und wobei jedes zum Kühlstrang gehörige Batteriemodul so mit den beiden Leitungen verbunden ist, dass sie eine Parallelschaltung bilden, und wobei für den Kühlstrang ein Dreiwegeventil (8) vorgesehen ist, welches so angeordnet ist, dass es einen Volumenstrom des Kühlfluids kontrollieren kann, welches durch den betreffenden Kühlstrang fließt, und wobei die Steuereinrichtung (11) so ausgebildet ist, dass sie die Stellung des zum Kühlstrang gehörigen Dreiwegeventils (8) steuern kann.

3. Verfahren zum Betrieb eines Batteriekraftwerkes, wobei das Batteriekraftwerk eine Vielzahl von Batteriemodulen (1) vom Typ Redox-Flow umfasst, und wobei die Batteriemodule (1) in mehreren parallelgeschalteten Batteriesträngen (7) angeordnet sind, und wobei ein Batteriestrang (7) jeweils mehrere Batteriemodule (1) umfasst, welche in Reihe geschaltet sind, und wobei jedes Batteriemodul (1) eine Tankeinrichtung (3) zum Speichern von Elektrolyt, wenigstens einen Temperatursensor (4) und wenigstens einen Wärmetauscher (5) umfasst, wobei der Temperatursensor (4) so angeordnet ist, dass er eine Elektrolyt-Temperatur erfassen kann, und wobei der Wärmetauscher (5) so angeordnet und ausgebildet ist, dass er Wärme mit einem Elektrolyt austauschen kann, und wobei das Batteriekraftwerk ein Kühlsystem zur Versorgung der Wärmetauscher (5) der Batteriemodule (1) mit einem Kühlfluid umfasst, und wobei das Kühlsystem einen Kühlkreislauf mit einen Vor- und einen Rücklauf, wenigstens eine Kühleinrichtung (9) und wenigstens eine Umwälzpumpe (10) zur Umwälzung des Kühlfluids im Kühlkreislauf umfasst, und wobei die Kühleinrichtung (9) so ausgebildet ist, dass sie eine Temperaturdifferenz zwischen dem Vor- und dem Rücklauf beeinflussen kann, und wobei das Kühlsystem wenigstens zwei weitere Temperatursensoren (12) zur Erfassung der Temperatur von Vor- und Rücklauf umfasst, und wobei alle Batteriemodule (1) so mit dem Vor- und Rücklauf des Kühlkreislaufes verbunden sind, dass der Kühlkreislauf eine Parallelschaltung aller Batteriemodule bildet, und wobei das Kühlsystem wenigsten ein Dreiwegeventil (8) umfasst, welches so angeordnet ist, dass es einen Volumenstrom des Kühlfluids kontrollieren kann, welches durch die Kühleinrichtung (9) fließt, und wobei das Kühlsystem für jedes Batteriemodul (1) wenigstens ein Ventil (6) umfasst, welches so angeordnet ist, dass es einen Volumenstrom des Kühlfluids kontrollieren kann, welches durch den Wärmetauscher (5) des zugehörigen Batteriemoduls (1) fließt, und wobei das Kühlsystem eine Steuereinrichtung (11) umfasst, welche so ausgebildet ist, dass es die von den Temperatursensoren (4, 12) erfassten Messwerte verarbeiten und die Stellungen der Ventile (6) und des Dreiwegeventils (8) steuern kann, und wobei das Verfahren wenigstens einen Betriebszustand umfasst, in dem die Ventile (6) und das Dreiwegeventil (8) so gesteuert werden, dass wenigstens ein Batteriemodul (1) Wärme durch das im Kühlkreislauf zirkulierende Kühlfluid aufnimmt, das von einem anderen Batteriemodul (1) an das Kühlfluid abgegeben wurde.

4. Verfahren nach Anspruch 3, wobei mehrere Batteriemodule (1) einen Kühlstrang bilden, wobei der Kühlstrang zwei parallel verlaufende Leitungen umfasst, und wobei jedes zum Kühlstrang gehörige Batteriemodul so mit den beiden Leitungen verbunden ist, dass sie eine Parallelschaltung bilden, und wobei für den Kühlstrang ein Dreiwegeventil (8) vorgesehen ist, welches so angeordnet ist, dass es einen Volumenstrom des Kühlfluids kontrollieren kann, welches durch den betreffenden Kühlstrang fließt, und wobei die Steuereinrichtung (11) so ausgebildet ist, dass sie die Stellung des zum Kühlstrang gehörigen Dreiwegeventils (8) steuern kann.

5. Verfahren nach einem der Ansprüche 3 oder 4, wobei das Batteriekraftwerk im dem wenigstens einen Betriebszustand in Teillast betrieben wird, und sich das wenigstens eine Batteriemodul (1), welches Wärme durch das im Kühlkreislauf zirkulierende Kühlfluid aufnimmt, im Stand-by befindet.

6. Verfahren nach einem der Ansprüche 3 oder 4, wobei das Batteriekraftwerk im dem wenigstens einen Betriebszustand in Teillast betrieben wird, und das wenigstens eine Batteriemodul (1), welches Wärme durch das im Kühlkreislauf zirkulierende Kühlfluid aufnimmt, geladen wird.

7. Batteriekraftwerk nach Anspruch 1 oder 2, welches eingerichtet ist, das Verfahren nach einem der Ansprüche 3 bis 6 automatisiert auszuführen.

8. Computerprogramm, umfassend Befehle, die bewirken, dass das Batteriekraftwerk des vorangehenden Anspruchs das Verfahren nach einem der Ansprüche 3 bis 6 ausführt.

9. Computerlesbares Medium, auf dem das Computerprogramm nach dem vorangehenden Anspruch gespeichert ist.

## Claims

1. Battery power plant comprising a plurality of battery modules (1) of the redox-flow type, wherein the battery modules (1) are arranged in a plurality of battery strings (7) connected in parallel, and wherein a battery string (7) respectively comprises a plurality of battery modules (1) which are connected in series, and wherein each battery module (1) comprises a tank device (3) for storing electrolyte, at least one temperature sensor (4) and at least one heat exchanger (5), wherein the temperature sensor (4) is arranged such that it is able to detect an electrolyte temperature, and wherein the heat exchanger (5) is arranged and formed such that it can exchange heat with an electrolyte, and wherein the battery power plant comprises a cooling system for supplying the heat exchangers (5) of the battery modules (1) with a cooling fluid, and wherein the cooling system comprises a cooling circuit with a feed flow and a return flow, at least one cooling device (9) and at least one circulating pump (10) for circulating the cooling fluid in the cooling circuit, and wherein the cooling device (9) is configured such that it can influence a temperature difference between feed flow and return flow, and wherein the cooling system comprises at least two further temperature sensors (12) for detecting the temperature of feed flow and return flow,
**characterized in that**
all battery modules (1) are connected to the feed flow and return flow of the cooling circuit such that the cooling circuit forms a parallel connection of all battery modules (1), and wherein the cooling system comprises at least one three-way valve (8) which is arranged to control a volume flow of the cooling fluid flowing through the cooling device (9), and wherein the cooling system comprises for each battery module (1) at least one valve (6) which is arranged to be able to control a volume flow of the cooling fluid flowing through the heat exchanger (5) of the associated battery module (1), and wherein the cooling system comprises a control device (11) adapted to be able to process the measurement values detected by the temperature sensors (4, 12) and to control the positions of the valves (6) and of the three-way valve (8) so as to improve an efficiency of the battery power plant.

2. Battery power plant according to claim 1, wherein a plurality of battery modules (1) form a cooling line, wherein the cooling line comprises two conduits extending in parallel, and wherein each battery module associated to the cooling line is connected to the two conduits in such a way that they form a parallel connection, and wherein a three-way valve (8) is provided for the cooling line and configured such that it is able to control a volume flow of the cooling fluid flowing through the cooling line in question, and wherein the control device (11) is configured in such a way that it is able to control the position of the three-way valve (8) associated to the cooling line.

3. Method for operating a battery power plant, wherein the battery power plant comprises a plurality of battery modules (1) of the redox-flow type, and wherein the battery modules (1) are arranged in a plurality of battery strings (7) connected in parallel, and wherein a battery string (7) respectively comprises a plurality of battery modules (1) which are connected in series, and wherein each battery module (1) comprises a tank device (3) for storing electrolyte, at least one temperature sensor (4) and at least one heat exchanger (5), wherein the temperature sensor (4) is arranged such that it is able to detect an electrolyte temperature, and the heat exchanger (5) is arranged and configured such that it can exchange heat with an electrolyte, and wherein the battery power plant comprises a cooling system for supplying the heat exchangers (5) of the battery modules (1) with a cooling fluid, and wherein the cooling system comprises a cooling circuit with a feed flow and a return flow, at least one cooling device (9) and at least one circulating pump (10) for circulating the cooling fluid in the cooling circuit, and wherein the cooling device (9) is configured such that it can influence a temperature difference between feed flow and return flow, and wherein the cooling system comprises at least two further temperature sensors (12) for detecting the temperature of the feed flow and the return flow, and wherein all battery modules (1) are connected to the feed flow and the return flow of the cooling circuit such that the cooling circuit forms a parallel connection of all battery modules, and wherein the cooling system comprises at least one three-way valve (8) which is arranged such that it is able to control a volume flow of the cooling fluid flowing through the cooling device (9), and wherein the cooling system comprises for each battery module (1) at least one valve (6) which is arranged to be able to control a volume flow of the cooling fluid flowing through the heat exchanger (5) of the associated battery module (1), and wherein the cooling system comprises a control device (11) which is configured to be able to process the measurement values detected by the temperature sensors (4, 12) and to control the positions of the valves (6) and of the three-way valve (8), and wherein the method comprises at least one operating state in which the valves (6) and the three-way valve (8) are controlled such that at least one battery module (1) absorbs heat from the cooling fluid circulating in the cooling circuit, which has been dissipated by another battery module (1) to the cooling fluid.

4. Method according to claim 3, wherein a plurality of battery modules (1) form a cooling line, wherein the cooling line comprises two conduits extending in parallel, and wherein each battery module associated to the cooling line is connected to the two conduits in such a way that they form a parallel circuit, and wherein a three-way valve (8) is provided for the cooling line and configured such that it is able to control a volume flow of the cooling fluid flowing through the cooling line in question, and wherein the control device (11) is configured such that it is able to control the position of the three-way valve (8) associated to the cooling line.

5. Method according to claim 3 or 4, wherein the battery power plant is operated in the at least one operating state in partial load, and the at least one battery module (1), which absorbs heat through the cooling fluid circulating in the cooling circuit, is in standby.

6. Method according to claim 3 or 4, wherein the battery power plant is operated in the at least one operating state in partial load, and the at least one battery module (1), which absorbs heat from the cooling fluid circulating in the cooling circuit, is charged.

7. Battery power plant according to claim 1 or 2, which is configured to automatically carry out the method according to any one of claims 3 to 6.

8. Computer program comprising instructions that cause the battery power plant of the preceding claim to carry out the method according to any one of claims 3 to 6.

9. Computer-readable medium, on which the computer program according to the preceding claim is stored.

## Revendications

1. Centrale électrique à batterie comprenant une pluralité de modules de batterie (1) du type à flux Redox, les modules de batterie (1) étant disposés en plusieurs chaines de batterie (7) montées en parallèle, et une chaine de batterie (7) comprenant respectivement plusieurs modules de batterie (1) qui sont montés en série, et dans lequel chaque module de batterie (1) comprend un dispositif de réservoir (3) pour stocker de l'électrolyte, au moins un capteur de température (4) et au moins un échangeur de chaleur (5), le capteur de température (4) étant disposé de manière à pouvoir détecter une température d'électrolyte, et l'échangeur de chaleur (5) étant disposé et conçu de manière à pouvoir détecter une température d'électrolyte, de manière à pouvoir échanger de la chaleur avec un électrolyte, et dans lequel la centrale électrique à batterie comprend un système de refroidissement pour alimenter les échangeurs de chaleur (5) des modules de batterie (1) avec un fluide de refroidissement, et dans lequel le système de refroidissement comprend un circuit de refroidissement avec un aller et un retour, au moins un dispositif de refroidissement (9) et au moins une pompe de circulation (10) pour faire circuler le fluide de refroidissement dans le circuit de refroidissement, et dans lequel le dispositif de refroidissement (9) est conçu de telle sorte qu'il peut influencer une différence de température entre l'aller et le retour, et dans lequel le système de refroidissement comprend au moins deux capteurs de température supplémentaires (12) pour détecter la température du flux aller et du flux, **caractérisé en ce que** tous les modules de batterie (1) sont connectés à l'aller et au retour du circuit de refroidissement de telle sorte que le circuit de refroidissement forme une connexion parallèle de tous les modules de batterie (1), et dans lequel le système de refroidissement comprend au moins une vanne à trois voies (8) qui est agencée pour contrôler un débit volumétrique du fluide de refroidissement qui s'écoule à travers le dispositif de refroidissement (9), et dans lequel pour chaque module de batterie (1), le système de refroidissement comprend au moins une vanne (6), qui est agencée de manière à pouvoir contrôler un débit volumétrique du fluide de refroidissement qui s'écoule à travers l'échangeur de chaleur (5) du module de batterie (1) associé, et dans lequel le système de refroidissement comprend un dispositif de commande (11) qui est conçu de manière à pouvoir traiter les valeurs de mesure détectées par les capteurs de température (4, 12) et commander les positions des vannes (6) et de la vanne à trois voies (8) afin d'améliorer une efficacité de la centrale électrique à batterie.

2. Centrale électrique à batterie selon la revendication 1, dans laquelle plusieurs modules de batterie (1) forment une chaîne de refroidissement, dans laquelle la chaîne de refroidissement comprend deux lignes parallèles, et dans laquelle chaque module de batterie appartenant à la chaîne de refroidissement est relié aux deux lignes de telle sorte qu'elles forment un circuit parallèle, et dans laquelle une vanne à trois voies est prévue pour la chaine de refroidissement (8) qui est agencée de manière à pouvoir contrôler un débit volumétrique du fluide de refroidissement qui s'écoule à travers la branche de refroidissement concernée, et dans laquelle le dispositif de commande (11) est conçu de manière à pouvoir commander la position de la vanne à trois voies (8) appartenant à la chaine de refroidissement.

3. Procédé d'exploitation d'une centrale électrique à batterie, dans lequel la centrale électrique à batterie comprend une pluralité de modules de batterie (1) du type à flux Redox, et dans lequel les modules de batterie (1) sont disposés en plusieurs chaines de batterie (7) montées en parallèle, et dans lequel une chaine de batterie (7) comprend respectivement une pluralité de modules de batterie (1) qui sont montés en série, et dans lequel chaque module de batterie (1) comprend un dispositif de réservoir (3) pour stocker de l'électrolyte, au moins un capteur de température (4) et au moins un échangeur de chaleur (5), dans lequel le capteur de température (4) est agencé de manière à pouvoir détecter une température d'électrolyte, et dans lequel l'échangeur de chaleur (5) est agencé et conçu de manière à pouvoir échanger de la chaleur avec un électrolyte, et dans lequel la centrale électrique à batterie comprend un système de refroidissement pour alimenter les échangeurs de chaleur (5) des modules de batterie (1) avec un fluide de refroidissement, et dans lequel le système de refroidissement comprend un circuit de refroidissement avec un aller et un retour, au moins un dispositif de refroidissement (9) et au moins une pompe de circulation (10) pour faire circuler le fluide de refroidissement dans le circuit de refroidissement, et dans lequel le dispositif de refroidissement (9) est conçu de manière à pouvoir influencer une différence de température entre l'aller et le retour, et dans lequel le système de refroidissement comprend au moins deux autres capteurs de température (12) pour détecter la température de l'aller et du retour, et dans lequel tous les modules de batterie (1) sont reliés à l'aller et au retour du circuit de refroidissement de telle sorte que le circuit de refroidissement forme une connexion parallèle de tous les modules de batterie, et dans lequel le système de refroidissement comprend au moins une vanne à trois voies (8) qui est agencée de manière à pouvoir contrôler un débit volumétrique du fluide de refroidissement qui s'écoule à travers le dispositif de refroidissement (9), et dans lequel le système de refroidissement comprend pour chaque module de batterie (1), au moins une vanne (6) qui est agencée de manière à pouvoir contrôler un débit volumétrique du fluide de refroidissement qui s'écoule à travers l'échangeur de chaleur (5) du module de batterie associé (1), et dans lequel le système de refroidissement comprend un dispositif de commande (11) qui est conçu de manière à pouvoir traiter les valeurs de mesure détectées par les capteurs de température (4, 12) et commander les positions des vannes (6) et de la vanne à trois voies (8), et dans lequel le procédé comprend au moins un état de fonctionnement dans lequel les vannes (6) et la vanne à trois voies (8) sont commandées de manière à ce qu'au moins un module de batterie (1) absorbe de la chaleur par le fluide de refroidissement circulant dans le circuit de refroidissement, qui a été délivré au fluide de refroidissement par un autre module de batterie (1).

4. Procédé selon la revendication 3, dans lequel plusieurs modules de batterie (1) forment une chaîne de refroidissement, dans lequel la chaîne de refroidissement comprend deux lignes parallèles, et dans lequel chaque module de batterie appartenant à la chaîne de refroidissement est connecté aux deux lignes de telle sorte qu'elles forment un circuit parallèle, et dans lequel il est prévu pour la branche de refroidissement une vanne à trois voies (8) qui est agencée de manière à pouvoir contrôler un débit volumique du fluide de refroidissement qui circule dans la branche de refroidissement concernée, et dans lequel le dispositif de commande (11) est conçu de manière à pouvoir commander la position de la vanne à trois voies (8) appartenant à la chaine de refroidissement.

5. Procédé selon l'une des revendications 3 ou 4, dans lequel la centrale électrique à batterie fonctionne en charge partielle dans ledit au moins un état de fonctionnement, et ledit au moins un module de batterie (1), qui absorbe de la chaleur par le fluide de refroidissement circulant dans le circuit de refroidissement, est en veille.

6. Procédé selon l'une des revendications 3 ou 4, dans lequel la centrale électrique à batterie fonctionne en charge partielle dans ledit au moins un état de fonctionnement, et ledit au moins un module de batterie (1), qui absorbe de la chaleur par le fluide de refroidissement circulant dans le circuit de refroidissement, est chargé.

7. Centrale électrique à batterie selon la revendication 1 ou 2, agencée pour mettre en œuvre de manière automatisée le procédé selon l'une des revendications 3 à 6.

8. Programme d'ordinateur comprenant des instructions pour que la centrale à batterie selon la revendication précédente exécute le procédé selon l'une quelconque des revendications 3 à 6.

9. Support lisible par une ordinateur sur lequel est stocké le programme d'ordinateur selon la revendication précédente.
